# EUROPEAN PATENT APPLICATION

(11) **EP 4 592 912 A1**
(43) Date of publication of application: **30.07.2025**
(21) Application number: 23867844.5
(22) Date of filing: 29.06.2023
(51) Int. Cl.: G06N 20/00, H04W 24/02

(54) **RADIO ACCESS NETWORK CONTROL DEVICE**

(30) Priority: 20.09.2022 JP 2022149389
(71) Applicant: KDDI Corporation, Tokyo 163-8003 (JP)
(72) Inventor: TSUKAMOTO, Yuu, Fujimino-shi, Saitama 356-8502 (JP); SAITOU, Kazuhiro, Fujimino-shi, Saitama 356-8502 (JP); YONEKAWA, Kei, Fujimino-shi, Saitama 356-8502 (JP); MURAMATSU, Shigeki, Fujimino-shi, Saitama 356-8502 (JP); KUROKAWA, Mori, Fujimino-shi, Saitama 356-8502 (JP); SHINBO, Hiroyuki, Fujimino-shi, Saitama 356-8502 (JP)
(74) Representative: Mathys & Squire
(86) International application number: PCT/JP2023/024202
(87) International publication number: WO 2024/062716

(57) **Abstract**

A non-real time control unit (Non-RT RIC) and a near-real time control unit (Near-RT RIC) are hierarchized, a learning and inference unit (11, 12, 13, 16,17, 18), that controls the radio access network on the basis of a result of inference performed by applying newest data to a learning model generated on the basis of data collected from an O-RAN base station device 10, is arranged in the near-real time control unit, and a retraining control unit (14, 15, 19, 20), that detects concept drift on the basis of a history of the data collected and causes the learning and inference unit to retrain the learning model when the concept drift is detected, is arranged in the non-real time control unit.

## Description

### TECHNICAL FIELD

The present invention relates to a control device for a radio access network, and particularly relates to a control device for a radio access network having a function for retraining a learning model generated by training data collected from a radio access network.

### BACKGROUND ART

The O-RAN Alliance is currently advancing the development of specifications in radio access networks (RAN) for dividing the previously-integrated functions of base stations into a Centralized Unit (CU) that performs session processing, a Distributed Unit (DU) that performs baseband processing, and a Radio Unit (RU) that performs radio processing, and opening the specifications for the interfaces among those units.

In Beyond 5G systems, performance such as throughput, communication latency, the number of connections, and the like is increasing, and such systems are expected to provide a wide variety of services (e.g., robot control, connected cars, AR/VR, and the like). Meanwhile, artificial intelligence (Al)/machine learning (ML) are attracting attention as key technologies for realizing those services.

Non-Patent Literature (NPL) 1 and 2 discuss applying AI/ML in a variety of applications, such as beamforming control, radio resource allocation, traffic prediction, base station function arrangement, and the like in order to maximize network performance with the limited network resources of a RAN.

NPL 3 discloses a technique in which a learning model is generated through learning performed on the basis of data collected from a RAN, inference is performed using the data collected from the RAN and the learning model, and the RAN is then controlled according to the inference results.

However, as time passes, the environment changes, and the like, the characteristics of the data used for the inference may change from those of the data used in learning (concept drift), causing a drop in the inference performance of the model.

In response to such technical issues, the inventors of the present invention have proposed, and applied for a patent on, an AI system that accumulates and monitors data related to AI/ML learning and inference from O-RAN base station devices, detects concept drift, and performs retraining (Patent Literature (PTL) 1).

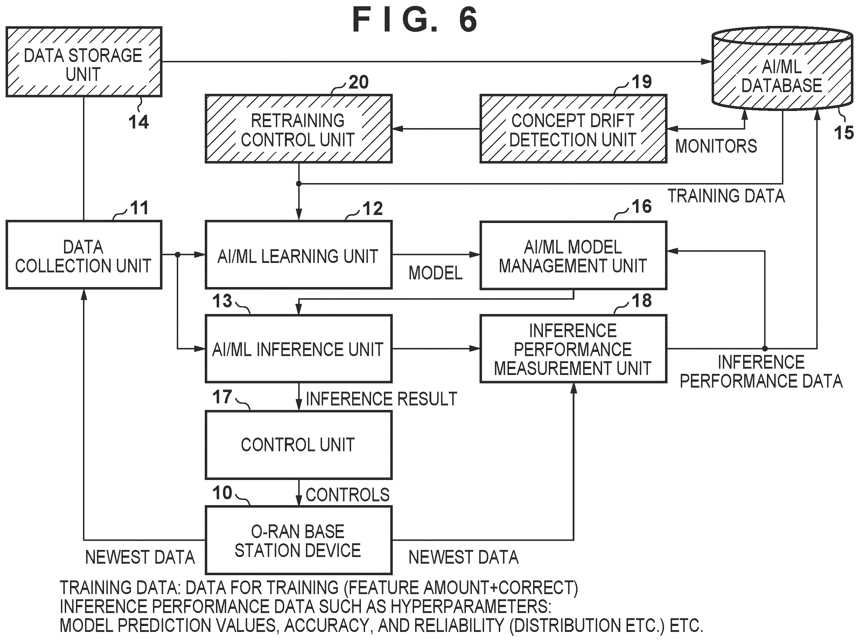

FIG. 6 is a function block diagram illustrating a conventional configuration of an AI system that detects concept drift and performs retraining.

A data collection unit 11 repeatedly collects the newest data from an O-RAN base station device 10, provides the collected newest data (collected data) to an AI/ML learning unit 12 and an AI/ML inference unit 13, and also accumulates that data in a data storage unit 14. The collected data accumulated in the data storage unit 14 is managed in an AI/ML database 15. The AI/ML learning unit 12 generates a learning model for learning the collected data and controlling the O-RAN base station device 10.

An AI/ML model management unit 16 manages learning models previously generated by the AI/ML learning unit 12. The AI/ML inference unit 13 performs inference based on the collected data newly collected by the data collection unit 11 and the learning model, and outputs an inference result to a control unit 17 and an inference performance measurement unit 18. The control unit 17 controls the O-RAN base station device 10 on the basis of the inference result.

The inference performance measurement unit 18 determines an inference performance on the basis of (i) the newest data collected after the control unit 17 has controlled the O-RAN base station device 10 on the basis of the inference result and (ii) that inference result, and stores inference performance data indicating the determined inference performance in the AI/ML database 15.

A concept drift detection unit 19 periodically obtains at least one of the collected data and the inference performance data from the AI/ML database 15, and determines whether concept drift is occurring. Upon detecting concept drift, the concept drift detection unit 19 instructs a retraining control unit 20 to generate a new learning model (perform retraining). The retraining control unit 20 provides data for retraining to the AI/ML learning unit 12 and instructs the retraining to be performed.

When retraining is instructed, the AI/ML learning unit 12 generates a new learning model on the basis of the collected data newly collected by the data collection unit 11, and outputs that learning model to the AI/ML model management unit 16. The AI/ML model management unit 16 compares the current learning model used by the AI/ML inference unit 13 with the new learning model, and outputs the new learning model to the AI/ML inference unit 13 if the new learning model provides better inference performance than the current learning model.

The AI/ML inference unit 13 performs inference thereafter using the new learning model. Note that if the new learning model provides worse inference performance than the current learning model, the AI/ML model management unit 16 can instruct the AI/ML learning unit 12 to perform retraining.

### CITATION LIST

### PATENT LITERATURE

PTL 1: Japanese Patent Application No. 2022-046347

### NON-PATENT LITERATURE

NPL 1: M. E. Morocho-Cayamcela, H. Lee and W. Lim, "Machine Learning for 5G/B5G Mobile and Wireless Communications: Potential, Limitations, and Future Directions," in IEEE Access, vol. 7, pp. 137184-137206, 2019
NPL 2: J. Kaur, M. A. Khan, M. Iftikhar, M. Imran and Q. Emad Ul Haq, "Machine Learning Techniques for 5G and Beyond," in IEEE Access, vol. 9, pp. 23472-23488, 2021.
NPL 3: O-RAN Alliance, "AI/ML workflow description and requirements," O-RAN.WG2.AIML-v01.03, Jul. 2021

### SUMMARY OF INVENTION

### TECHNICAL PROBLEM

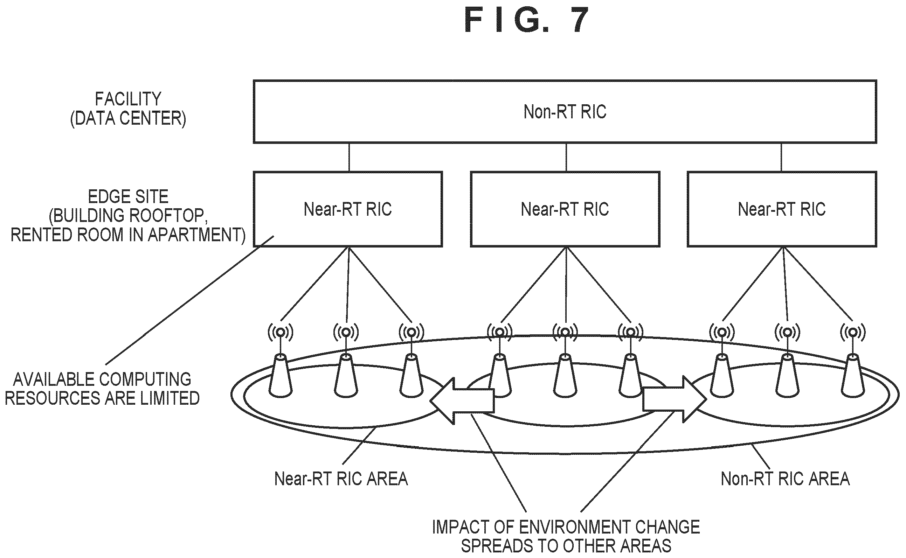

As indicated in FIG. 7, RAN Intelligent Controllers (RICs), which handle the control and optimization of RAN functions, have a hierarchical structure including a "Non-Real Time (RT) RIC", which is a non-real-time component, and "Near-RT RICs", which are near-real time components, and these components have different control periods.

Here, the RICs have different characteristics, namely that the control period of the Non-RT RIC is at least 1 sec, providing a broad area for control, whereas the control period of the Near-RT RIC is 10 msec to 1 sec, for a narrow area for control. As such, the optimal arrangements of function blocks in the Near-RT RIC and the Non-RT RIC with respect to AI/ML has been a subject of investigation.

For example, Non-RT RICs may be installed in facilities, and Near-RT RICs may be installed at edge sites such as building rooftops. In this case, the following technical issues may arise if all functions, both the functions pertaining to AI/ML learning and the functions pertaining to AI/ML retraining, are provided in the Near-RT RIC in order to prioritize real-time performance.

First, the processing load on the Near-RT RIC will increase. In other words, edge sites have power and space constraints, and it is therefore not possible to provide ample computing resources.

Second, only information under the Near-RT RIC can be used to detect concept drift. In other words, the information of adjacent areas cannot be used, which delays the detection of concept drift.

For example, if road construction is carried out in a given area and the traffic volume of connected cars changes, it is assumed that changes in the vehicle flow rate will affect adjacent areas as well. At this time, if only information of one's own area is monitored, environmental changes caused by the road construction cannot be detected immediately, which reduces the ability of the retraining to adapt to the environmental changes.

### SOLUTION TO PROBLEM

An object of the present invention is to address the technical issues described above by providing a control device for a radio access network that optimizes the arrangement of function blocks related to AI/ML in Near-RT RICs and Non-RT RICs.

To achieve the object described above, the present invention provides a control device for a radio access network in which a non-real time control unit and a near-real time control unit are hierarchized. The control device includes: a learning and inference unit that generates a learning model on the basis of data collected from the radio access network, and controls the radio access network on the basis of a result of inference performed by applying newest data of the data collected to the learning model; and a retraining unit that detects concept drift on the basis of a history of the data collected, and causes the learning and inference unit to retrain the learning model when the concept drift is detected. The learning and inference unit is provided in the near-real time control unit, and the retraining unit is provided in the non-real time control unit.

### ADVANTAGEOUS EFFECTS OF INVENTION

According to the present invention, the following effects are achieved.
(1) Functions pertaining to learning and inference are provided in the near-real time control unit, and functions pertaining to retraining are provided in the non-real time control unit. This makes it possible to reduce the processing load on the near-real time control unit.
(2) Because the functions pertaining to retraining are provided in the non-real time control unit, the learning model can be retrained even if the edge site has limited computing resources.
(3) The information under the non-real time control unit can be used to detect concept drift, which enables adaptive detection of concept drift, making it possible to better adapt to environmental changes.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a function block diagram illustrating the configuration of the main parts of an O-RAN control device according to one embodiment of the present invention.
FIG. 2A is a diagram illustrating an example of adding a method for specifying a target to an A1 interface.
FIG. 2B is a diagram illustrating an example of adding a method for designating a target to an A1 interface.
FIG. 3A is a diagram illustrating an example of adding a method for specifying a policy to an A1 interface.
FIG. 3B is a diagram illustrating an example of adding a method for specifying a policy to an A1 interface.
FIG. 4A is a diagram illustrating an example of adding data used for retraining to an A1 interface.
FIG. 4B is a diagram illustrating an example of adding data used for retraining to an A1 interface.
FIG. 5 is a sequence flow illustrating operations according to the present invention.
FIG. 6 is a function block diagram illustrating a conventional configuration of an AI system that detects concept drift and performs retraining.
FIG. 7 is a function block diagram illustrating a RAN Intelligent Controller (RIC).

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

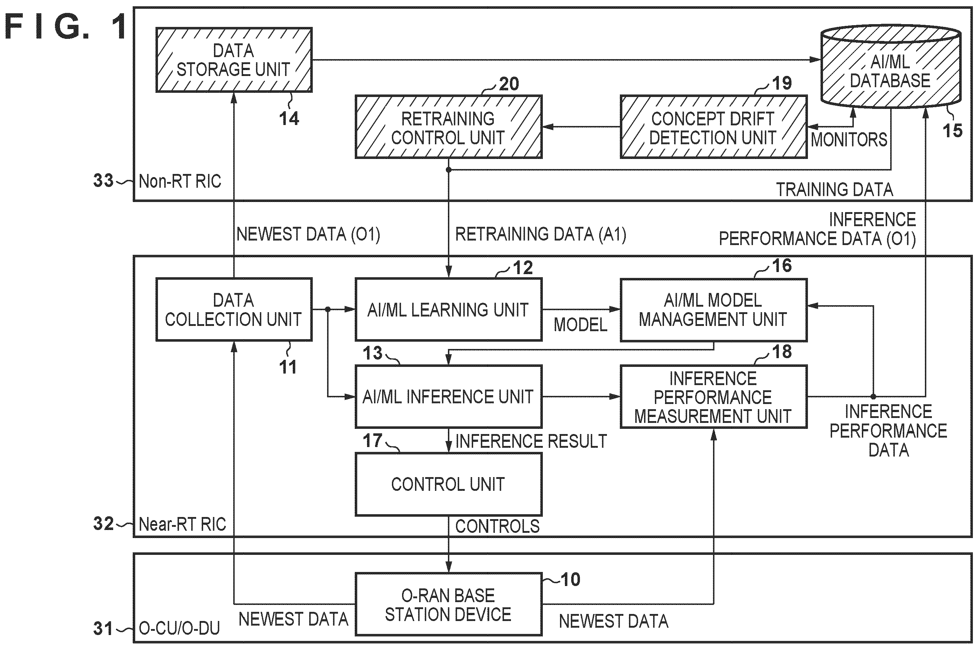

FIG. 1 is a function block diagram illustrating the configuration of the main parts of an O-RAN control device according to one embodiment of the present invention. Here, configurations not needed for the description of the present invention are not shown. The same reference signs as those mentioned above indicate the same or equivalent parts. The present embodiment is characterized in that functions pertaining to AI/ML learning are provided in a Near-RT RIC, and functions pertaining to AI/ML retraining are provided in a Non-RT RIC.

The O-RAN control device is constituted by an O-CU/O-DU 31, a Near-RT RIC 32, and a Non-RT RIC 33, and the functions can communicate with one another over various interfaces, including the O1 interface, the A1 interface, and the E2 interface defined by the O-RAN Alliance. The O-RAN base station device 10 is provided in the O-CU/O-DU 31.

A data collection unit 11, an AI/ML learning unit 12, an AI/ML inference unit 13, an AI/ML model management unit 16, a control unit 17, and an inference performance measurement unit 18 are mainly provided in the Near-RT RIC 32 as functions pertaining to AI/ML learning and inference.

In the Near-RT RIC 32, the data storage unit 14 collects newest data from the O-RAN base station device 10 and sends that data to the data storage unit 14 of the Non-RT RIC 33 through the O1 interface. The inference performance measurement unit 18 sends the inference performance data to the AI/ML database 15 of the Non-RT RIC 33 through the O1 interface. The retraining control unit 20 of the Non-RT RIC 33 makes a request for retraining to the AI/ML learning unit 12 of the Near-RT RIC 32 through the A1 interface when concept drift is detected.

In this manner, in the present embodiment, the functions pertaining to AI/ML learning and inference and the functions pertaining to retraining the learning model are distributed between the Near-RT RIC 32 and the Non-RT RIC 33, respectively, and thus the following three pieces of information in particular are added to the A1 interface as information pertaining to the request for retraining.
(1) Designation of target
(2) Specification of policy
(3) Data used for retraining

An ID of the learning model is added to (1) designate the target (the learning model) in the present embodiment. An instruction for retraining is added to (2) specify the policy in the present embodiment. "Experience information (state, next state, action, reward)" is used for reinforcement learning and "input data and correct labels" are used for supervised learning as the (3) data used for retraining in the present embodiment. The data format can be compressed in table format.

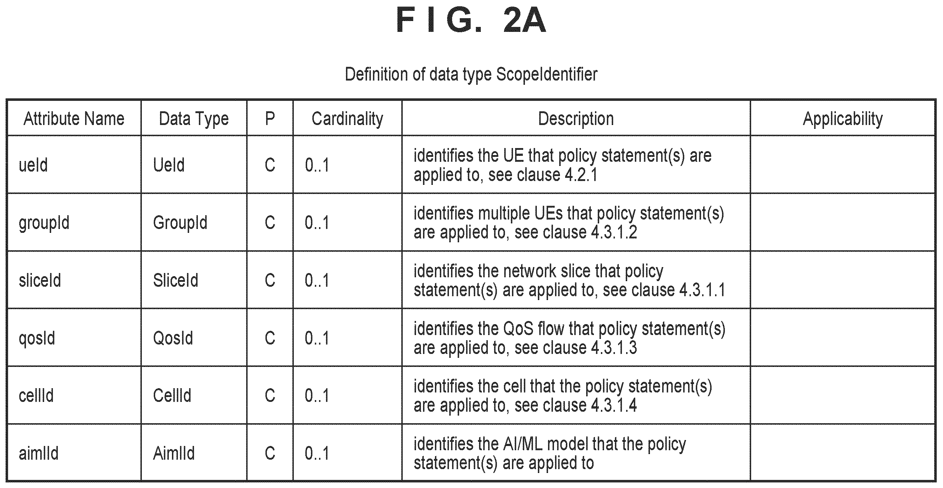

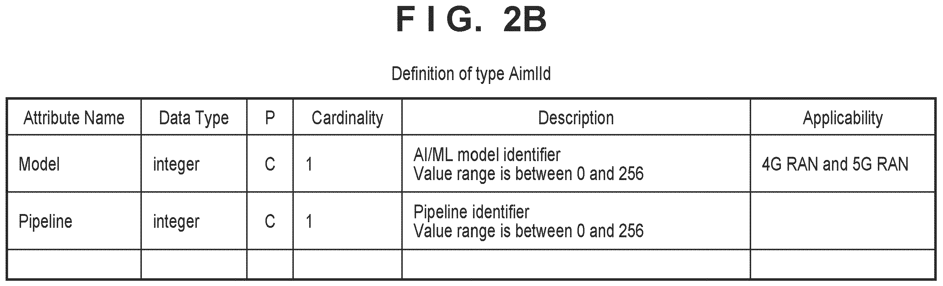

FIGS. 2A and 2B are diagrams illustrating an example of a method for (1) designating the target. In O-RAN, policies and jobs can be sent from the Non-RT RIC 33 to the Near-RT RIC 32 through the A1 interface. In the A1 interface, ScopeIdentifier is defined as an identifier to designate the target for applying a policy or job (O-RAN.WG2.A1TD-v02.00). In the present embodiment, an AI/ML model ID is added to the existing ScopeIdentifier, as illustrated in FIG. 2A, and a table defining the details of the AI/ML model ID is added, as illustrated in FIG. 2B, to designate the AI/ML model to be retrained.

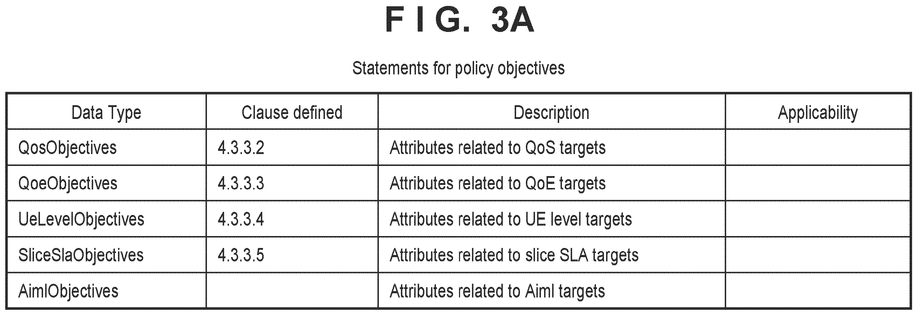

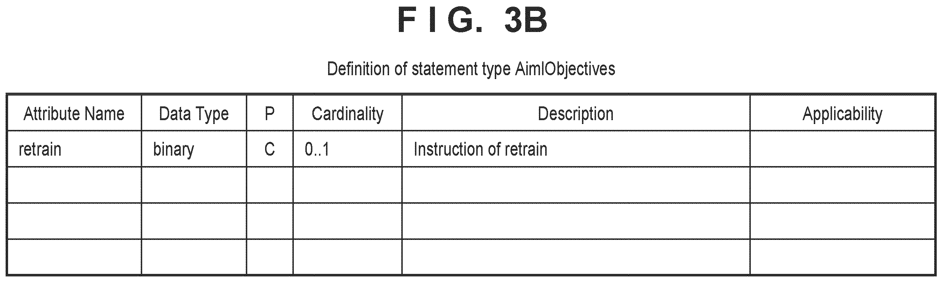

FIGS. 3A and 3B are diagrams illustrating an example of a method for (2) specifying the policy. In the A1 interface, policy objectives are defined as the policy for transmission from the Non-RT RIC 33 to the Near-RT RIC 32. In the present embodiment, AimlObjectives is added to the existing policy objectives as a policy for AI/ML, as illustrated in FIG. 3A, to instruct the retraining of the AI/ML model.

Furthermore, as illustrated in FIG. 3B, a table defining the details of AimlObjectives is added, and "retrain", indicating retraining, is added thereto.

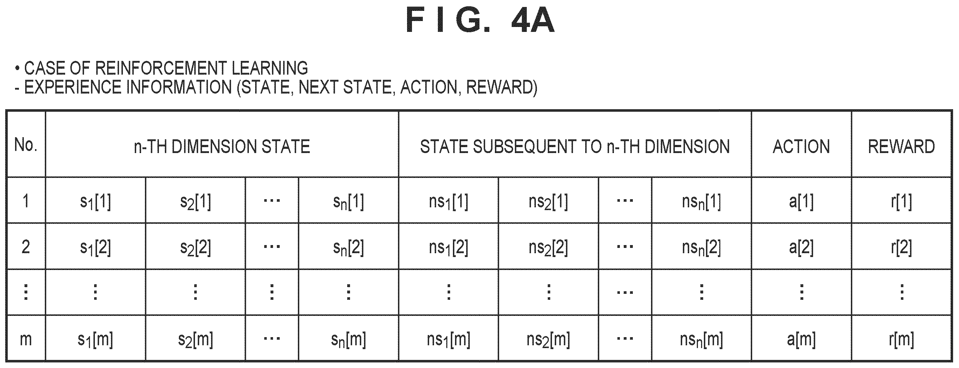

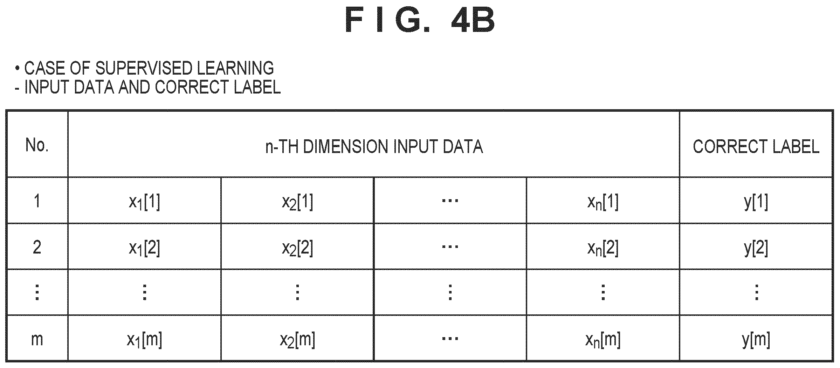

FIGS. 4A and 4B are diagrams illustrating examples of (3) the data used for retraining. In reinforcement learning, for example, when considering the control of base station function allocation, the action (allocation information on the base station functions) is determined from the state (throughput, latency, resource utilization rate, and the like) at a given point in time, and when transitioning to the next state, a reward for evaluating the action (rate of achievement rate of the required quality or the like) is obtained.

Accordingly, optimal control is achieved which maximizes the reward by learning the series of data as the experience information. In the present embodiment, m pieces of experience information (states s₁ to sₙ, next states ns₁ to nsₙ, an action a, and a reward r) for retraining are sent in the table format illustrated in FIG. 4A.

In supervised learning, for example, considering traffic prediction, a correct answer is inferred from the input data by learning the input data (time series information of traffic or the like) and correct labels thereof (the correct value of the traffic in the next moment). Accordingly, m pieces of training data (input data x₁ to xₙ, and correct labels y₁ to yₙ) for the retraining are sent in the table format illustrated in FIG. 4B.

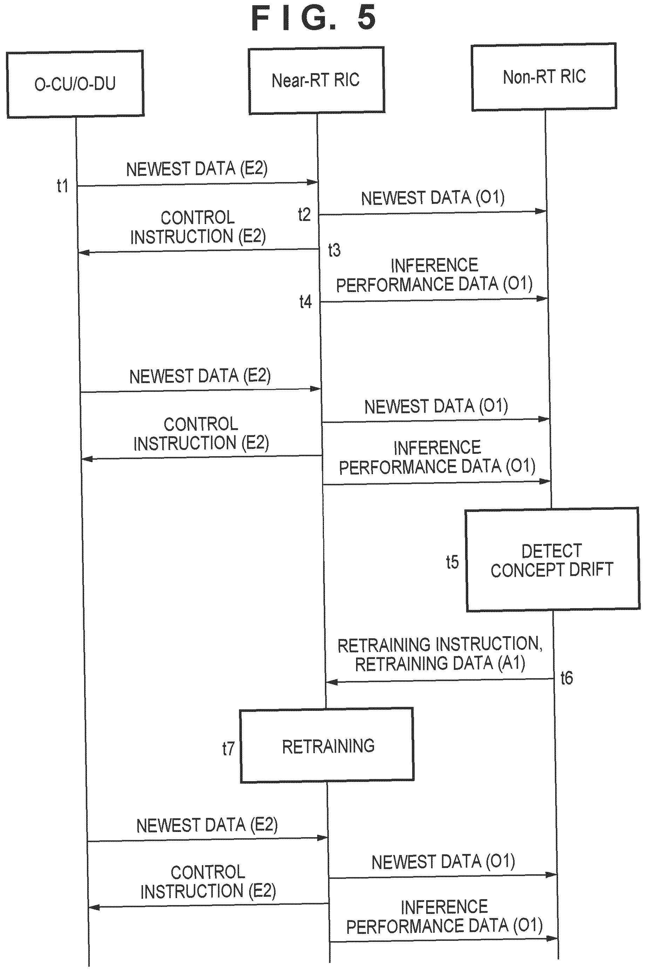

FIG. 5 is a sequence flow illustrating operations according to the present embodiment. The descriptions given here will focus on the communication between the O-CU/O-DU, the Near-RT RIC, and the Non-RT RIC.

In the present embodiment, the communication between the O-CU/O-DU and the Near-RT RIC is performed through the E2 interface, the communication from the Near-RT RIC to the Non-RT RIC is performed through the O1 interface, and the communication from the Non-RT RIC to the Near-RT RIC is performed through the A1 interface.

The O-CU/O-DU repeatedly sends the newest data of the O-RAN base station device 10 to the Near-RT RIC in a predetermined period. In the present embodiment, when the O-CU/O-DU sends the newest data to the Near-RT RIC at time t1, in the Near-RT RIC, the newest data is obtained by the data collection unit 11.

In the Near-RT RIC, the newest data is sent to the Non-RT RIC and the AI/ML inference unit 13 performs inference by applying the newest data to the current learning model at time t2, and the inference result is communicated to the control unit 17 and the inference performance measurement unit 18.

At time t3, the control unit 17 instructs the O-RAN base station device 10 of the O-CU/O-DU to perform control based on the inference result. The inference performance measurement unit 18 determines the inference performance on the basis of (i) the newest data collected after the control unit 17 has controlled the O-RAN base station device 10 on the basis of the inference result and (ii) the inference result, and at time t4, performance data indicating the inference performance is sent to the Non-RT RIC.

In the Non-RT RIC, the concept drift detection unit 19 monitors the newest data and the performance data, and when concept drift is detected at time t5, at time t6, the retraining control unit 20 makes an instruction for retraining to the Near-RT RIC having designated the target learning model, and then reads out and sends the data for retraining from the AI/ML database 15.

In the Near-RT RIC, when the instruction for retraining and the data for retraining are obtained, at time t7, the AI/ML learning unit 12 performs the retraining and generates a learning model, which is updated and registered in the AI/ML model management unit 16. Accordingly, each time data is collected thereafter, control based on the retrained learning model is performed.

According to the present embodiment, functions pertaining to learning and inference are provided in the Near-RT RIC, whereas functions pertaining to retraining are provided in the Non-RT RIC. This makes it possible to reduce the processing load on the Near-RT RIC. Accordingly, even if edge site computing resources are limited, in environments where concept drift does not occur frequently, the concept drift can be detected with good response time, which makes it possible to improve the adaptability to environmental changes.

As a result, the embodiment makes it possible to contribute to Goal 9 of the United Nations-led Sustainable Development Goals (SDGs), which is to "build resilient infrastructure, promote inclusive and sustainable industrialization, and foster innovation", and Goal 11, which is to "make cities inclusive, safe, resilient, and sustainable".

The invention is not limited to the foregoing embodiments, and various variations/changes are possible within the spirit of the invention.

This application claims priority from Japanese Patent Application No. 2022-149389, filed September 20, 2022, which is hereby incorporated by reference herein.

## Claims

1. A control device for a radio access network in which a non-real time control unit and a near-real time control unit are hierarchized, the control device **characterized by** comprising:
a learning and inference unit that generates a learning model on the basis of data collected from the radio access network, and controls the radio access network on the basis of a result of inference performed by applying newest data of the data collected to the learning model; and
a retraining unit that detects concept drift on the basis of a history of the data collected, and causes the learning and inference unit to retrain the learning model when the concept drift is detected,
wherein the learning and inference unit is provided in the near-real time control unit, and the retraining unit is provided in the non-real time control unit.

2. The control device for a radio access network according to claim 1, **characterized in that** the learning and inference unit includes:
data collection means for collecting the newest data from the radio access network;
learning means for generating a learning model on the basis of the data collected;
control means for performing inference by applying the data collected to the learning model, and controlling the radio access network on the basis of a result of the inference; and
inference performance measuring means for measuring an inference performance on the basis of the data collected and the result of the inference,
wherein the data collection means and the inference performance measuring means send the newest data and the result of the inference, respectively, to the retraining unit through an O1 interface.

3. The control device for a radio access network according to claim 2, **characterized in that** the retraining unit includes:
a database in which the data collected and the inference performance is stored;
concept drift detecting means for detecting concept drift on the basis of the data and the inference performance stored in the database; and
retraining control means for sending information to the learning and inference unit to retrain the learning model when concept drift is detected,
wherein the retraining control means sends information for causing retraining to be performed to the learning and inference unit through an A1 interface.

4. The control device for a radio access network according to claim 3, **characterized in that** the information for causing retraining to be performed includes an ID of a learning model as a designation of a target, an instruction for retraining as an indication of a policy, and a data type and a data format as data used for the retraining.

5. The control device for a radio access network according to claim 4, **characterized in that** the data type includes a state, a next state, an action, and a reward as experience information for reinforcement learning.

6. The control device for a radio access network according to claim 4 or 5, **characterized in that** the data type includes input data and a correct label for supervised learning.
